Europäisches Patentamt

(19) European Patent Office (11) Numéro de publication: **0 137 541**

Office européen des brevets **B1**

(12) **FASCICULE DE BREVET EUROPÉEN**

(45) Date de publication du fascicule du brevet: (51) Int. Cl.⁴: **A 01 N 63/00**
25.01.89

(21) Numéro de dépôt: **84201284.1**

(22) Date de dépôt: **07.09.84**

㊹ Compositions concentrées contenant des produits pesticides biosynthétiques et procédés pour leur
production et leur utilisation.

(30) Priorité: **19.09.83 FR 8314968**

(43) Date de publication de la demande:
**17.04.85 Bulletin 85/16**

(45) Mention de la délivrance du brevet:
**25.01.89 Bulletin 89/4**

(84) Etats contractants désignés:
**AT BE CH DE FR GB IT LI LU NL SE**

(56) Documents cité:
**EP-A-0 099 301**
**GB-A-1 004 327**
**US-A-3 271 243**
**US-A-3 651 215**

**Cationic Surfactant, Ed. by E. Jungermann, M.
Dekker, Inc., New York, 1970**
**The Pesticide Manual, 7th ed., publ. by the British
Crop Protection Council, 1983**

Le dossier contient des informations techniques
présentées postérieurement au dépôt de la
demande et ne figurant pas dans le présent
fascicule.

(73) Titulaire: **SOLVAY & Cie (Société Anonyme), Rue
du Prince Albert, 33, B-1050 Bruxelles (BE)**

(72) Inventeur: **Gago, Ignace, Chaussée de Nivelles, 53,
B-1420 Braine- l'Alleud (BE)**
Inventeur: **Detroz, René, Chaussée de Louvain,
534, B-1328 Ohain (BE)**

**EP 0 137 541 B1**

**Description**

La présente invention concerne des compositions concentrées contenant des produits pesticides biosynthétiques ainsi que des procédés pour leur production et leur utilisation.

Les produits pesticides biosynthétiques présentent de nombreux avantages par rapport aux pesticides chimiques, notamment du fait de leur grande spécificité. Ainsi, les pesticides biosynthétiques toxiques ou pathogènes pour des insectes sont en général non toxiques et non pathogènes pour l'homme et les autres êtres vivants. En outre, vu leur spécificité, ils ne mettent en général pas en danger les prédateurs et parasites naturels des insectes que l'on désire éliminer, ni les insectes bénéfiques. Ils ne sont pas phytotoxiques et ne laissent aucun résidu toxique. Enfin, les insectes ne paraissent pas développer une résistance à ce type de pesticides, contrairement à ce qui se passe lors de l'utilisation d'insecticides organiques de synthèse.

Les pesticides biosynthétiques peuvent être obtenus à partir de microorganismes très divers. Une classe de pesticides biosynthétiques des plus couramment utilisés dans la lutte contre certains insectes est obtenue à partir de Bacillus thuringiensis Berliner dont on connaît de nombreuses variétés.

Les pesticides biosynthétiques n'étant en général pas solubles, ils nécessitent la mise en oeuvre de techniques particulières pour leur application. Ils peuvent se présenter sous forme de particules solides sèches ou sous forme de suspensions de particules solides dans un liquide adéquat. En général, ils sont mis en oeuvre sous forme de suspensions que l'on pulvérise sur les zones infestées selon diverses techniques connues en elles-mêmes. Une technique fréquemment utilisée pour traiter de grandes surfaces telles que des forêts ou des grandes étendues de terres cultivées ou encore de grandes étendues d'eau, de marécages ou de rivières consiste à pulvériser par voie aérienne des suspensione de pesticides biosynthétiques.

On a proposé, dans le brevet US-A-3 271 243 (INTERNATIONAL MINERALS à CHEMICAL CORP) de préparer des concentrés de pesticides biosynthétiques en mélangeant le brouet provenant de la fermentation du Bacillus thuringiensis avec un hydrocarbure liquide contenant un agent émulsionnant et de traiter les zones infestées en pulvérisant, par voie aérienne, le produit obtenu après dilution à l'eau de ce concentré. Le concentré étant visqueux, l'opération de dilution est indispensable pour que le produit puisse être mis en oeuvre correctement. Les suspensions pulvérisées ont de ce fait une concentration en particules solides, et donc en matières actives, assez faible. Dès lors, les étendues que l'on peut traiter par voie aérienne, en un seul vol, sont réduites. En outre, il est fréquent que les suspensions concentrées décantent au cours du stockage.

La présente invention vise à procurer des compositions concentrées contenant des produits pesticides biosynthétiques ne présentant pas les inconvénients des compositions connues. Elle vise à procurer des suspensions de produits pesticides biosynthétiques qui sont stables, n'ont pas tendance à décanter et conservent une bonne activité au cours du stockage, qui sont fluides et ont une viscosité suffisamment faible pour pouvoir être aisément pulvérisées, qui n'ont pas une odeur désagréable, qui ont une concentration en matières actives élevée de manière à ce que le volume à transporter pour une dose de matière active donnée soit faible, qui sont faciles à disperser, sans que l'on observe des phénomènes de floculation ou de décantation et sans que l'on doive avoir recours à une agitation particulière. Les compositions contenant des produits pesticides biosynthétiques en suspension selon l'invention conviennent particulièrement bien aux applications par voie aérienne et elles peuvent être utilisées telles quelles sans dispersion préalable dans un diluant. Les matières organiques présentes dans les suspensions selon l'invention ne coagulent pas. Les compositions selon l'invention sont très efficaces et ont une portée d'action très étendue quand elles sont pulvérisées sur des étendues d'eau telles que des cours d'eau.

L'invention concerne des compositions concentrées contenant des produits pesticides biosynthétiques sous forme de particules solides en suspension dans un liquide contenant au moins un agent tensioactif dans lesquelles les agents tensioactifs sont des sels d'ammonium quaternaire choisis parmi les sels de monoalkyltriméthylammonium et de dialkyldiméthylammonium dans lesquels le groupe alkyle contient de 6 à 24 atomes de carbone, le liquide contenant essentiellement de l'eau.

L'anion du sel peut être un anion quelconque qui est en général choisi parmi les halogènes tels que le chlore et le brome, le sulfate, les monoalkylsulfates et l'acétate. De bons résultats ont été obtenus lorsque l'anion est un anion monovalent et plus particulièrement un anion halogène tel que le chlore.

Les meilleurs résultats ont été obtenus avec des chlorures de dialkyldiméthylammonium ou de monoalkyltriméthylammonium dans lesquels le groupe alkyle contient de 8 à 20 atomes de carbone et peut comporter une ou plusieurs insaturations.

On peut également utiliser des mélanges d'agents tensioactifs cationiques. En général, le mélange contient au moins un agent tensioactif cationique hydrophile et un agent tensioactif cationique hydrophobe. Dans ce cas, le mélange contient de préférence au moins un agent tensioactif cationique d'indice HLB inférieur à 11 et le plus souvent compris entre 6 et 11 et de préférence entre 8 et 11 et au moins un agent tensioactif cationique d'indice HLB égal ou supérieur à 11 et le plus souvent de 11 à 18. Dans ces mélanges le rapport pondéral entre les deux sortes d'agents tensioactifs est en général compris entre 0,01 et 100 et le plus souvent entre 0,1 et 10.

Les doses d'agents tensioactifs cationiques peuvent varier dans de larges limites. En général leur poids est d'au moins 0,5 % et de préférence d'au moins 0,8 % du poids de la composition concentrée selon l'invention. Le plus souvent leur poids ne dépasse pas 8 % et de préférence pas 5 % du poids de la composition concentrée selon l'invention.

Les agents tensioactifs présents dans les compositions selon l'invention sont essentiellement des agents tensioactifs cationiques.

2

On peut éventuellement leur ajouter de petites quantités d'agents tensioactifs non-ioniques. En général, celles-ci ne dépassent pas 1,5 % et de préférence pas 1,2 % du poids de la composition. Lorsqu'on met en oeuvre un agent tensioactif non-ionique, il est souvent présent dans la composition à des doses d'au moins 0,01 et de préférence 0,05 % du poids de la composition. Des doses de 0,5 à 1 % du poids de la composition conviennent bien.

Par produits pesticides biosynthétiques, on entend désigner les produits pesticides biosynthétiques qui permettent de lutter contre les parasites animal et végétaux de l'homme, des animaux et des végétaux (à l'exclusion des micro-organismes provoquant les maladies de l'homme et des animaux) et contre les agents vecteurs de maladies parasitaires et virales. Ces pesticides biosynthétiques, également appelés biopesticides peuvent avoir ainsi une action fongistatique ou fongicide, appelée également action anticryptogamique, une action herbicide ou encore une action contre les arthropodes et plus particulièrement contre les insectes. L'invention s'applique tout particulièrement aux pesticides biosynthétiques ayant une action insecticide ou anticryptogamique. De bons résultats ont été obtenus avec des pesticides biosynthétiques ayant une action insecticide.

Ces pesticides biosynthétiques peuvent provenir de divers types d'organismes pathogènes tels que les microorganismes (virus, fungi, protozoaires et bactéries) et les nématodes. Ils peuvent également provenir de microorganismes quelconques transformés par insertion d'ADN codant pour la fabrication de toxines et provenant de microorganismes pathogènes.

Les pesticides biosynthétiques peuvent se trouver dans les compositions concentrées selon l'invention sous des formes très diverses. Ainsi, ils peuvent se présenter sous la forme des organismes eux-mêmes a un stade quelconque de leur évolution, en ce comprises les formes végétatives éventuelles, tels quels, en association avec leur milieu de culture, sous forme totalement ou partiellement lysée, sous forme totalement ou partiellement sporulée, sous une forme ayant libéré partiellement ou totalement les spores par divers moyens tels que l'autolyse bactérienne, ou sous la forme des produits qui sont excrétés spontanément par les organismes tels que les exotoxines, sous la forme des produits que l'on peut extraire de ces organismes tels que les endotoxines par toute méthode connue en elle-même impliquant ou non une lyse de l'organisme en cause, sous la forme des produits éventuellement libérés par les organismes au cours de certaines étapes de leur évolution (cristaux associés ou non aux spores) ou encore sous plusieurs de ces formes simultanément.

Ces différentes formes peuvent éventuellement être associées à des résidus du milieu de culture. De bons résultats ont été obtenus avec le mélange contenant des spores, les cristaux associés et éventuellement des exotoxines qui se forme spontanément lors de l'autolyse de la bactérie en fin de sporulation. Un tel mélange peut contenir, outre les spores, les cristaux associés ou non aux spores et les exotoxines éventuelles, des cellules ou des débris de cellules ainsi que des produits solides résiduaires du milieu nutritif mis en oeuvre lors de la culture.

Comme microorganismes bactériens convenant bien en général comme source de pesticides biosynthétiques, on peut signaler les eubactériales de la classe des sporulales et plus particulièrement celles de l'ordre des bacillales telles que les Bacillacées (par exemple le genre Bacillus). Parmi ceux-ci, conviennent particulièrement bien les microorganismes bactériens du genre Bacillus tels que le Bacillus thuringiensis, le Bacillus sphaericus, le Bacillus popilliae, le Bacillus cereus, le Bacillus larvae, le Bacillus lentimorbus, le Bacillus fribourgensis, et le Bacillus penetrans.

De bons résultats ont été obtenus avec les Bacillus thuringiensis de tous sérotypes et plus particulièrement ceux de sérotypes 1, 3a, 3a3b, 7, 9, 10 et 14. Les meilleurs résultats ont été obtenus avec les Bacillus thuringiensis de sérotypes 1 (variété thuringiensis), 3a3b (variété Kurstaki), 7 (variété Aizawa) et 14 (variété israëlensis). D'excellents résultats ont été obtenus avec le Bacillus thuringiensis de sérotype 14 qui s'est révélé particulièrement efficace notamment contre les larves de simulies. Les divers types de Bacillus thuringiensis peuvent être mis en oeuvre dans les compositions selon l'invention sous forme des microorganismes eux-mêmes, tels quels ou lysés, de leurs spores, des cristaux associés ou non à leurs spores ou sous plusieurs de ces formes. Ces différentes formes peuvent éventuellement être associées à des résidus du milieu de culture. De bons résultats ont été obtenus en utilisant le mélange contenant des spores et les cristaux associés qui se forme spontanément lors de l'autolyse de la bactérie en fin de sporulation. Un tel mélange peut contenir, outre les spores et les cristaux associés ou non aux spores, des cellules ou des débris de cellules ainsi que des produits solides résiduaires du milieu nutritif mis en oeuvre lors de la culture.

Les compositions concentrées selon l'invention peuvent contenir des quantités variables de pesticides biosynthétiques. En général, elles contiennent au moins 3 % et le plus souvent au moins 5 % en poids de pesticides biosynthétiques. Leur teneur en pesticides biosynthétiques ne dépasse en général pas 40 % et le plus souvent pas 30 % de leur poids sans que ces valeurs ne soient critiques.

Les compositions selon l'invention peuvent contenir en outre des phosphates inorganiques tels que les phosphates condensés. Par phosphate condensé, on entend désigner tous les phosphates présentant une structure cyclique appelés également métaphophastes ou polymétaphosphates, les polyphosphates à longues chaînes linéaires contenant au moins 4 atomes dans leur molécule et tous les polyphosphates à chaînes contenant des cycles dans leur structure que l'on appelle parfois ultraphosphates. Ces phosphates condensés présentent plusieurs séquences de liaisons phosphore-oxygène dans leur molécule. Comme phosphates cycliques, les trimétaphosphates, les tétramétaphosphates et les hexamétaphosphates sont avantageux. Parmi ceux-ci, les hexamétaphosphates conviennent bien.

Lorsque l'on met en oeuvre les hexamétaphosphates, ceux-ci sont en général mis en oeuvre dans les compositions à raison de la moitié, en poids, du poids des agents tensioactifs cationiques mis en oeuvre.

Outre des phosphates inorganiques, les compositions selon l'invention peuvent contenir divers autres additifs tels que des parfums ou des masques d'odeurs, des préservatifs de divers types tels que des antioxydants, des agents antibactériens (bactéricides ou bactériostatiques) et des agents susceptibles d'absorber les rayonnements ultra-violets (qui pourraient éventuellement causer la désactivation du pesticide biosynthétique), des charges, des agents régulateurs de pH, des adhésifs, des collants, des appâts et des corps gras. Elles peuvent aussi contenir des pesticides organiques de synthèse (pesticides chimiques). En général, les additifs comprennent au moins un préservatif et au moins un régulateur de pH. Les préservatifs sont en général des composés organiques.

On choisit le plus souvent des additifs qui sont solubles ou dispersibles dans le solvant constitutif de la phase liquide. En général, on choisit des additifs qui sont solubles ou dispersibles dans l'eau.

Les divers additifs sont en général présents en quantités ne dépassant pas le poids de pesticides biosynthétiques. Le plus souvent, ils sont présents en quantités de 0,01 à 50 % du poids des pesticides biosynthétiques.

Les compositions selon l'invention peuvent également contenir des résidus de la fabrication du pesticide biosynthétique.

De bons résultats ont été obtenus lorsque le solvant contient au moins 75 % et le plus souvent au moins 90 % en poids d'eau. En général, le liquide présent dans la composition selon l'invention est constitué essentiellement d'eau. Les autres solvants éventuels sont le plus souvent les solvants éventuels des agents tensioactifs cationiques ou les solvants éventuels des autres additifs. Il s'agit en général de solvants usuels tels que les alcools et plus particulièrement les alcools ayant de 1 à 7 atomes de carbone.

Les compositions concentrées selon l'invention contiennent en général de 3 à 40 % et le plus souvent de 5 à 30 % en poids de pesticides biosynthétiques, de 0,5 à 8 % et de préférence de 0,8 à 5 % en poids d'agents tensioactifs cationiques et éventuellement de 0,001 à 10 % et le plus souvent de 0,005 à 5 % en poids d'additifs divers.

Les compositions selon l'invention sous forme de suspension dans un liquide contenant de l'eau, ont un pH ne dépassant en général pas 7 et de préférence pas 6. En général leur pH n'est pas inférieur à 3 et de préférence pas inférieur à 3,5.

Les compositions selon l'invention sont fluides et ont en général une viscosité, mesurée à l'aide d'un viscosimètre Brookfield sous une vitesse de rotation de 20 tours minutes, qui ne dépasse pas 3 N.s.m$^{-2}$ à la température ambiante et qui est le plus souvent de 0,01 à 2,5 et de préférence de 0,02 à 1,5 N.s.m$^{-2}$.

La présente invention concerne également des procédés pour la fabrication des compositions selon l'invention.

Un procédé qui convient pour la fabrication des compositions selon l'invention consiste à pré lever le milieu de culture des microorganismes générateurs des produits pesticides biosynthétiques, à en séparer de l'eau par des techniques habituelles de séparation d'eau telles la centrifugation, l'ultrafiltration, la précipitation par addition d'un non-solvant tel que l'acétone ou la floculation suivie d'une décantation de manière à obtenir une pâte.

Dans le cas du Bacillus thuringiensis le milieu de culture est prélevé par exemple à la fin de la phase de sporulation.

Un autre procédé consiste à séparer du milieu de culture des microorganismes générateurs de produits pesticides biosynthétiques, à la fin de la phase de sporulation, des fractions riches en cristaux ou en spores ou en ces deux produits simultanément. Ces fractions sont ensuite traitées selon les mêmes techniques que celles utilisées pour le traitement des pâtes.

Les agents tensioactifs cationiques sont en général introduits dans la pâte recueillie. Les autres additifs éventuels sont incorporés avant, pendant ou après l'addition des agents tensioactifs cationiques à la pâte. L'ordre d'introduction des divers additifs, en ce compris l'agent tensioactif cationique n'est en général pas critique.

Un autre procédé consiste à disperser une poudre sèche à base de produits pesticides biosynthétiques dans le liquide pour former une crème. La poudre sèche peut être obtenue par séchage de la pâte obtenue selon les procédés précités par des techniques habituelles telles que le séchage par atomisation, le séchage par lyophilisation ou le séchage en tambour de manière à obtenir des particules solides contenant en général moins de 15 % et de préférence moins de 12 % en poids d'eau.

L'agent tensioactif cationique et les autres additifs éventuels peuvent être incorporés conjointement ou distinctement à la pâte avant séchage, à la poudre sèche ou à la phase liquide avant, pendant ou après la mise en suspension du produit pesticide biosynthétique.

La présente invention concerne également un procédé pour l'utilisation des compositions.

Les compositions selon l'invention peuvent être utilisées comme pesticides et plus particulièrement comme agents pour éliminer les insectes à un stade quelconque de leur développement. Pour ce faire, elles sont pulvérisées sur les surfaces infestées selon toutes méthodes connues en elles-mêmes telles que la pulvérisation manuelle, la pulvérisation mécanique et plus particulièrement la pulvérisation par voie aérienne. Elles peuvent notamment être pulvérisées sur les surfaces infestées par des insectes et plus particulièrement par des lépidoptères, des diptères, des coléoptères, des aphaniptères, des orthoptères, des isoptères et des homoptères.

Les doses à mettre en oeuvre sont fonction du pesticide biosynthétique utilisé et de l'agent pathogène à éliminer.

Dans le cas du Bacillus thuringiensis et plus particulièrement des sérotypes 1, 3a3b, 7 et 14, on pulvérise en général de 50 à 5000 g de particules solides à l'hectare. Les compositions selon l'invention peuvent être pulvérisées telles quelles. Elles peuvent être également dispersées, diluées ou émulsionnées dans un diluant comme l'eau ou un diluant organique tel qu'un produit de la distillation du pétrole (par exemple le gasoil). Dans ce cas, on les dilue par 1 à 300 fois et de préférence 4 à 120 fois leur volume de diluant.

Les compositions à base de pesticides biosynthétiques dérivés du Bacillus thuringiensis variété israëlensis conviennent bien pour traiter les surfaces infestées par des diptères et plus particulièrement des simuliidés tels que les simulies.

Afin d'illustrer l'invention, on donne ci-après des exemples de compositions selon l'invention (exemples 2 et 3) ainsi que de compositions de comparaison (exemples 1R, 4R et 5R).

**Exemples**

Le mélange obtenu lors de la fermentation du Bacillus thuringiensis sérotype 14 (variété israëlensis, (B.t.14) est, après sporulation, centrifugé pour donner une pâte contenant environ 15,5 % de matières sèches.

Cinq pâtes ont été préparées. L'une, appelée produit 1R de comparaison, ne contient pas d'agent tensioactif. Les pâtes appelées produits 2 et 3 selon l'invention contiennent des agents tensioactifs cationiques. Les pâtes appelées produits 4R et 5R de comparaison contiennent des agents tensioactifs non-ionique (pâte 4R) ou anionique (pâte 5R).

Le pH, la teneur en matières sèches et la viscosité des pâtes ont été mesurés et soht rassemblés au tableau I.

La viscosité a été mesurée à l'aide d'un viscosimètre BROOKFIELD équipé d'un spindle n° 4 sous une vitesse de rotation de 20 tours minutes.

**Tableau I**

| Produit n° | Agent tensioactif type | Teneur % | pH | Teneur en matières sèches, % | viscosité, $N.s.m^{-2}$ |
|---|---|---|---|---|---|
| 1R | - | | 4 | 15,5 | 2,650 |
| 2 | chlorure de monoalkyl-triméthylammonium (alkyle en $C_{16}$-$C_{18}$) * | 2 | 4 | 15,1 | 0,540 |
| 3 | chlorure de dialkyldi-méthylammonium (alkyle en $C_8$-$C_{18}$) ** | 3 | 4 | 15,05 | 0,250 |
| 4R | alcool gras ($C_{18}$) condensé avec 5 oxydes d'éthylène | 2 | 4 | 15,1 | 3,050 |
| 5R | xylènesulfonate de soude | 2 | 4,3 | 15,1 | 4,000 |

* solution à 50 %                    ** solution à 75 %

Les compositions 2 et 3 se sont révélées très efficaces contre les larves de simulies.

**Revendications**

1. Compositions concentrées contenant des produits pesticides biosynthétiques provenant de microorganismes de l'ordre des Bacillacées sous forme de particules solides en suspension dans un liquide contenant au moins un agent tensioactif caractérisées en ce que les agents tensioactifs sont des sels d'ammonium quaternaire choisis parmi les sels de monoalkyltriméthylammonium et de dialkyldiméthylammonium dont le groupe alkyle contient de 6 à 24 atomes de carbone et en ce que le liquide contient essentiellement de l'eau.

2. Compositions concentrées selon la revendication 1 caractérisées en ce qu'elles contiennent de 0,5 à 8 % en poids de sels d'ammonium.

3. Compositions concentrées selon la revendication 1 ou 2 caractérisées en ce que les produits pesticides biosynthétiques proviennent de microorganismesdes types Bacillus thuringiensis.

4. Compositions concentrées selon la revendication 3 caractérisées en ce que les produits pesticides biosynthétiques proviennent de microorganismes du type Bacillus thuringiensis varie te israëlensis.

5. Compositions concentrées selon l'une quelconque des revendications 1 à 4 caractérisées en ce qu'elles contiennent de 3 à 40 % en poids de produits pesticides biosynthétiques.

6. Procédé pour la fabrication de compositions selon l'une quelconque des revendications 1 à 5 caractérisé en ce qu'on prélève le milieu de culture des microorganismes, on en sépare l'eau de manière à obtenir une pâte et on y incorpore les sels d'ammonium.

7. Procédé pour éliminer les insectes caractérisé en ce qu'on pulvérise sur les surfaces infestées les compositions selon l'une quelconque des revendications 1 à 5.

**Patentansprüche**

1. Konzentrierte Zusammensetzungen enthaltend biosynthetische pestizide Produkte, die von Mikroorganismen der Ordnung der Bacillaceen stammen, als feste Partikel in Suspension in einer Flüssigkeit enthaltend mindestens ein grenzflächenaktives Mittel, dadurch gekennzeichnet, daß die grenzflächenaktiven Mittel Salze von quaternärem Ammonium sind, ausgewählt unter den Salzen von Monoalkyltrimethylammonium und Dialkyldimethylammonium, deren Alkylgruppe von 6 bis 24 Kohlenstoffatome enthält, und, daß die Flüssigkeit im wesentlichen Wasser enthält.

2. Konzentrierte Zusammensetzungen nach Anspruch 1, dadurch gekennzeichnet, daß sie von 0,5 bis 8 Gew.-% des Ammoniumsalzes enthalten.

3. Konzentrierte Zusammensetzungen nach Anspruch 1 oder 2, dadurch gekennzeichnet, daß die biosynthetischen pestiziden Produkte von Mikroorganismen der Art Bacillus thuringiensis stammen.

4. Konzentrierte Zusammensetzungen nach Anspruch 3, dadurch gekennzeichnet, daß die biosynthetischen pestiziden Produkte von Mikroorganismen der Art Bacillus thuringiensis Varietät israëlensis stammen.

5. Konzentrierte Zusammensetzungen nach einem der Ansprüche 1 bis 4, dadurch gekennzeichnet, daß sie von 3 bis 40 Gew.-% der biosynthetischen pestiziden Produkte enthalten.

6. Verfahren zur Herstellung von Zusammensetzungen nach einem der Ansprüche 1 bis 5, dadurch gekennzeichnet, daß man das Medium der Mikroorganismenkultur entnimmt, davon das Wasser abtrennt, um eine Paste zu erhalten und dazu die Ammoniumsalze zusetzt.

7. Verfahren zur Beseitigung von Insekten, dadurch gekennzeichnet, daß man die Zusammensetzungen nach einem der Ansprüche 1 bis 5 über die befallenen Flächen versprüht.

**Claims**

1. Concentrated compositions containing biosynthetic pesticidal products originating from microorganisms of the order of the Bacillaceae in the form of solid particles suspended in a liquid containing at least one surfactant, characterized in that the surfactants are quaternary ammonium salts chosen from the monoalkyltrimethylammonium and dialkyldimethylammonium salts in which the alkyl group contains from 6 to 24 carbon atoms and in that the liquid essentially contains water.

2. Concentrated compositions according to Claim 1, characterized in that they contain from 0.5 to 8 % by weight of ammonium salts.

3. Concentrated compositions according to Claim 1 or 2, characterized in that the biosynthetic pesticidal products originate from microorganisms of the Bacillus thuringiensis types.

4. Concentrated compositions according to Claim 3, characterized in that the biosynthetic pesticidal products originate from microorganisms of the type Bacillus thuringiens is variety israelensis.

5. Concentrated compositions according to any one of Claims 1 to 4, characterized in that they contain from 3 to 40 % by weight of biosynthetic pesticidal products.

6. Process for the manufacture of compositions according to any one of Claims 1 to 5, characterized in that the culture medium is withdrawn from the microorganisms, the water is separated from it so as to obtain a paste and ammonium salts are incorporated in it.

7. Process for eliminating insects, characterized in that the compositions according to any one of Claims 1 to 5 are sprayed onto the infested areas.